# EUROPEAN PATENT APPLICATION

(11) **EP 4 383 165 A1**
(43) Date of publication of application: **12.06.2024**
(21) Application number: 22211389.6
(22) Date of filing: 05.12.2022
(51) Int. Cl.: G06Q 10/10

(54) **DISAMBIGUATION ASSISTANCE IN AN AUTOMATION SYSTEM**

(71) Applicant: ABB SCHWEIZ AG, 5400 Baden (CH)
(72) Inventor: ZIOBRO, David, 724 62 Västerås (SE); BJORNDAL, Petra, 645 52 Strängnäs (SE); MACAUDA, Andrea, 16165 Genova (IT); SKONNEGARD, Pierre, 647 35 Mariefred (SE); UDDMAN, Marcus, 865 32 Alnö (SE); SCHUETZ, Gregor, 8404 Winterthur (CH); ROMANIUK, Jaroslaw, 95-060 Jordanow (PL); LE, Duy Khanh, Long Thanh Bac (VN); AZHAR, Saad, 724 77 Västerås (SE)
(74) Representative: Kransell & Wennborg KB

(57) **Abstract**

An automation system comprises a first user terminal for a first user, a second user terminal for a second user and a collaboration control device. The collaboration control device analyses (S100) speech of a conversation between the first and the second user, determines (S120) a first term (Ti) used by the first user to be confusing to the second user, which determining is based on the analysis of the speech, determines (S130) a first asset (A1) in the automation system corresponding to the first term and orders (S140) a displaying of a visual illustration (VI) corresponding to the first asset (A1) to the second user.

## Description

### TECHNICAL FIELD

The invention relates to a method, a collaboration control device, a computer program and computer program code for supporting collaboration between a first user at a first user terminal and a second user at a second user terminal as well as to an automation system comprising such collaboration control device and user terminals.

### BACKGROUND

Users of an automation system may need to collaborate with each other, for instance in relation to operation or assets of the automation system. The users may for instance sit at different sites remotely talking with each other while looking at the display of an own user terminal. In order to allow the collaboration to take place, voice communication may also be set up between the users.

In this scenario it may be of interest to use visualizations.

Visualization in relation to collaboration is disclosed in US 10685668, where a system transcribes a recorded portion of a speech communication between a first and a second user to form a transcribed portion. The system then selects and marks one of the words as a keyword, performs a search for the keyword in order to produce at least one definition of the keyword and displays the transcribed portion and the keyword together with its definition to the first and/or the second user. This visualization seems to be performed in order for a user to show competence in a collaboration session even though he or she is not well prepared.

However, in a collaboration session involving at least two users, there may be a misunderstanding about which asset the users talk about. This may lead to confusion, frustration and an increased effort as well as a reduced productivity of the collaboration session. There is thus a need for allowing two users of an automation system involved in a communication session to better understand the assets they discuss.

### SUMMARY

One object of the invention is therefore to improve collaboration between users of an automation system.

This object is according to a first aspect achieved by a method of supporting collaboration between a first user at a first user terminal and a second user at a second user terminal, the method being performed by a collaboration control device of an automation system and comprising:
analysing speech of a conversation between the first and the second user,
determining a first term used by the first user to be confusing to the second user, which determining is based on the analysis of the speech,
determining a first asset in the automation system corresponding to the first term, and
ordering a displaying of a visual illustration corresponding to the first asset to the second user.

The method performed by the collaboration control device may be performed by a collaboration control function implemented in the collaboration control device.

The object is according to a second aspect achieved through a collaboration control device for supporting collaboration between a first user at a first user terminal and a second user at a second user terminal, the collaboration control device being provided for an automation system and comprising a processor configured to :
analyse speech of a conversation between the first and the second user,
determine a first term used by the first user to be confusing to the second user, which determining is based on the analysis of the speech,
determine a first asset in the automation system corresponding to the first term, and
order a displaying of a visual illustration corresponding to the first asset to the second user.

The object is according to a third aspect achieved through a computer program for supporting collaboration between a first user at a first user terminal and a second user at a second user terminal, the computer program comprising computer code which when executed by a processor of a collaboration control device according to the second aspect causes the collaboration control device to perform the steps of the method according to the first aspect.

The object is according to a fourth aspect further achieved through a computer program product for supporting collaboration between a first user at a first user terminal and a second user at a second user terminal, the computer program product comprising a data carrier with the computer program with computer program code according to the third aspect.

The object is according to a fifth aspect further achieved through an automation system comprising:
a first user terminal for a first user,
a second user terminal for a second user, and
a collaboration control device comprising a processor configured to:
   analyse speech of a conversation between the first and the second user,
   determine a first term used by the first user to be confusing to the second user, which determining is based on the analysis of the speech,
   determine a first asset in the automation system corresponding to the first term, and
   order a displaying of a visual illustration corresponding to the first asset to the second user.

The displaying of the visual illustration is made using the second user terminal.

The ordering of the displaying as well as the displaying may be performed while the collaboration is ongoing, which may be while the at least one communication channel is being used.

The speech may be speech in at least one communication channel set up between the first user terminal of the first user and the second user terminal of the second user. The at least one channel may comprise a first channel with speech of the first user and a second channel with speech of the second user.

The determining of a first asset corresponding to the first term may be made through querying a database of assets in the automation system.

The displaying of the visual indication corresponding to the asset may comprise displaying an element corresponding to the first asset at a video stream displayed by the second user terminal. The first asset may additionally appear in the video stream and the displayed element may be linked to the first asset in the video stream.

In one variation of the first aspect, the method further comprises detecting, based on the use of a gaze tracking device, the first user gazing at an element displayed by the first user terminal. In this case the determining of the first asset is based on detection of the element at which the first user gazes.

In a corresponding variation of the second aspect, the collaboration control device is further configured to detect, based on the use of a gaze tracking device, the first user gazing at an element displayed by the first user terminal. In this case the collaboration control device, when being configured to the determine a first asset in the automation system corresponding to the first term. is configured to determine the first asset based on detection of the element at which the first user gazes.

The gaze tracking device may be provided at the first user terminal.

Alternatively or instead the determining of the first asset may be based on user inputs made in relation to an element displayed at the first user terminal.

In another variation of the first aspect, the analysis of the speech comprises identifying a potentially confusing first term used by the first user and analysing the potentially confusing first term. In this case the determining that the first term is confusing is based on the analysis of the first potentially confusing first term.

In a corresponding variation of the second aspect, the collaboration control device when being configured to analyse the speech is further configured to identify a first potentially confusing first term used by the first user and analyse the first potentially confusing first term. In this case the collaboration control device is further configured to, when determining that the first term is confusing, determine that the first term is confusing based on the analysis of the first potentially confusing first term.

The potentially confusing first term may be a term that appears for the first time in the conversation. It may for instance be the first time that it appears in the speech of the first user.

It is additionally possible that the first user has a first role in the automation system and that the second user has a second role in the automation system. The first role may additionally be linked to a first hierarchical level in an organisation operating the automation system, while the second role may be linked to a second hierarchical level of the organization. The first role may additionally or instead be linked to a first experience level and the second role may additionally or instead be linked to a second experience level, which experience levels may be linked to length of time, such as years of experience.

In this case the analysis of the first potentially confusing first term may comprise an investigation of if the potentially confusing first term is used in the second role, which may additionally involve investigating if the term is used at the second hierarchical level and/or at the second experience level. The first term may then be determined to be confusing in case it is not used by the second user in the second role, which may also be at the second hierarchical level and/or the second experience level.

The analysing of the potentially confusing first term may additionally or instead comprise analysing the language of the potentially confusing first term. In this case the determining that the first term is confusing may be made if the potentially confusing first term is in another language than the speech of the second user and/or at least a majority of the conversation, where the majority of the conversation may comprise the majority of the speech of the first user.

The analysing of the potentially confusing first term may comprise determining that the potentially confusing first term is a term of a type of asset in the automation system.

The analysis of the speech may additionally comprise identifying a second term used by the second user and analysing the second term. In this case the determining that the first term is confusing to the second user is also based on the analysis of the second term.

The identifying of the potentially confusing first term may also be based on the second term.

The analysis of the second term may additionally comprise determining a type of object to which the second term corresponds. In this case the determining that the first term is confusing to the second user may be made if the type of object is different than the type of asset to which the potentially confusing first term corresponds.

The analysis of the second term may comprise determining that the second term is a term for a type of asset in the automation system. In this case the determining of the first term as being confusing may be made if the type of asset of the second term is different than the type of asset of the potentially confusing first term.

An asset may be a piece of automation equipment.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described in more detail in relation to the enclosed drawings, in which:
fig. 1 schematically shows an automation system including a collaboration control device and a first and a second user terminal,
fig. 2 shows a block schematic of a user terminal,
fig. 3 shows a first way of realizing the collaboration control device,
fig. 4 shows a computer program product in the form of a CD ROM disc with computer program code used to implement a collaboration control function of the collaboration control device,
fig. 5 schematically shows a second way of realizing the collaboration control device,
fig. 6 shows a first user gazing at a first element on a first screen of a first screen environment provided at the first user terminal,
fig. 7 shows a second user gazing at a screen in a second screen environment provided at the second user terminal,
fig. 8 shows a flow chart of a number of method steps in a first embodiment of a method of supporting collaboration between the first user at the first user terminal and the second user at the second user terminal, and
fig. 9 shows a flow chart of a number of method steps in a second embodiment of a method of supporting collaboration between the first user at the first user terminal and the second user at the second user terminal.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards an automation system and more particularly towards the collaboration between users of the automation system.

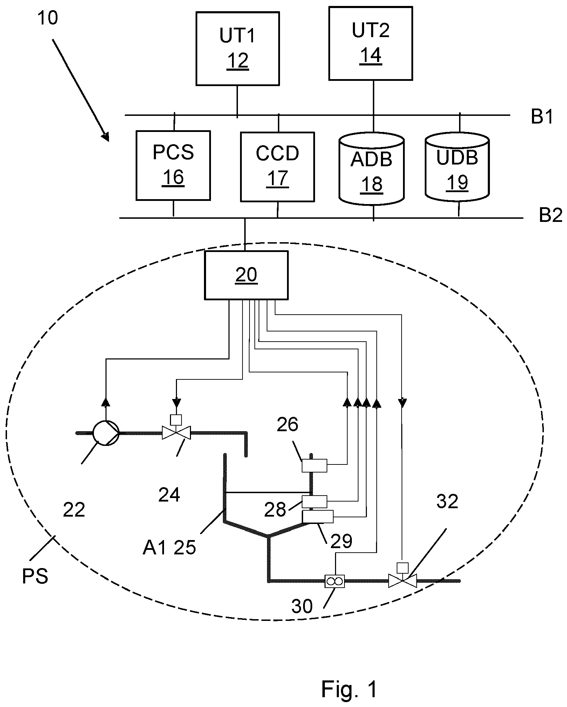

Fig. 1 schematically shows an automation system 10, which as an example is a process control system for controlling an industrial process or perhaps part of an industrial process. Typical processes are electrical power generation, transmission, distribution and supply processes, water purification and distribution processes, oil and gas production and distribution processes, petrochemical, chemical, pharmaceutical and food processes, and pulp and paper production processes. These are just some examples of processes where the system can be applied. There exist countless other processes.

Normally there may in such a system be one or more controllers having some local software for controlling one or more pieces of automation equipment. The automation equipment may comprise process control equipment that influence or measure different properties of the technical process. A piece of automation equipment may for instance be a pump, a motor, a valve, etc. A process, or a part of a process, may be controlled via a server, which then typically communicates with a controller for providing local control. The process may be monitored through an operator terminal or workstation, which communicates with the server. Such a workstation or operator terminal is also a form of user terminal.

In fig. 1 the system 10 therefore includes a number of user terminals UT1 12 and UT2 14 connected to a first bus B1. There is in this case a first user terminal UT112 and a second user terminal UT2 14. There is furthermore a second bus B2 and between the first and second busses B1 and B2 there is connected a process control server PCS 16 with a control function for controlling the process. There is also a collaboration control device CCD 17 as well as an asset database ADB 18 and a user database UDB 19 connected between the first and the second buses B1 and B2. To the second bus B2 there is furthermore connected a controller 20 (Process Controller or Programmable Logic Controller (PLC)) for providing local control in the system 10.

In the figure there is only provided one controller 20. It should however be realized that there may be several more controllers in the system 10. The controller 20 is connected to one or more pieces of automation equipment. As an example, the controller 20 is shown as being connected to automation equipment in a process section PS for controlling a process control flow through a part of the industrial process, which process section PS includes a first inlet pipe leading to a tank 25 and a second outlet pipe leaving the tank 25. In the first pipe there is provided a pump 22 that pumps fluid into the first pipe as well as a first valve 24. In the tank 25 there are provided two level sensors 26 and 28 and in the outlet pipe there is provided a flow meter 30 and a second valve 32. There is also a temperature sensor 29 in the tank 25. The pipes, tank, valves and sensors are examples of automation equipment. The tank 25 is here also a first asset A1 in the automation system 10.

The level sensors 26 and 28 measure the physical quantity liquid volume, the temperature sensor measures the physical quantity liquid temperature and the flow meter 30 measures the physical quantity volumetric flow rate of the liquid. The controller 20 may receive control input values from the pump 22, level sensors 26 and 28 and temperature sensor 29 and regulate the liquid level in the tank 25 based on these control input values through controlling the first valve 24. It also receives control input values from the flow meter 30 and temperature sensor 29 and controls the second valve 32 for regulating the output fluid flow.

The above-described control is merely an example of one type of control in a process control example. It should be realized that several different other types of control are possible and that several other types of physical quantities can be measured. It is for instance possible to also measure pressure. The above-described automation equipment are therefore also merely examples of automation equipment that can be used. Also, the controller 20 and the process control server 16 may be considered to be pieces of automation equipment as may the pipes and the sensors.

Also the other pieces of automation equipment are examples of assets in the automation system as is the controller and the process control server.

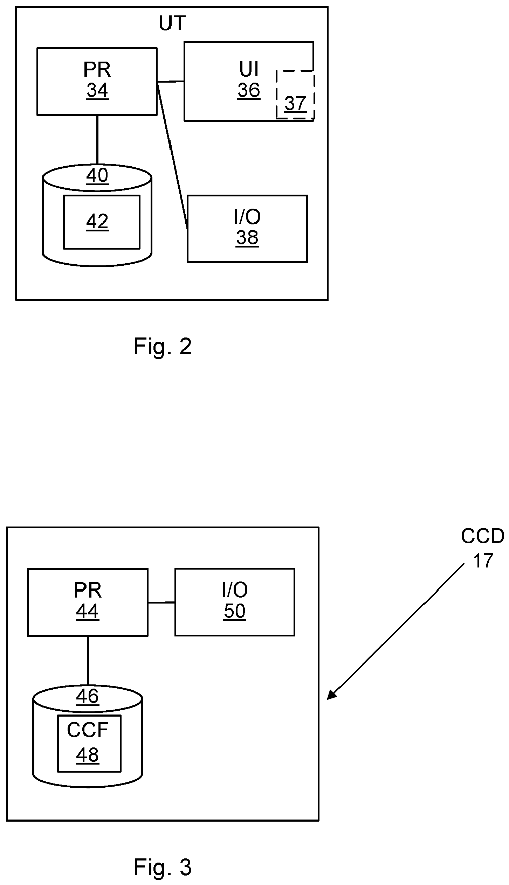

Fig. 2 schematically shows one realization of a user terminal UT. There is a processor PR 34 and a data storage 40 with computer program instructions 42 that, when executed by the processor 34, implements a user terminal control function. There is also an input/output (I/O) interface 38 for communication with the other entities in the process control system and especially for communicating with the collaboration control device 17, the process control server 16 and other user terminals.

Finally, there is a user interface UI 36 which comprises one or more screens 37 for displaying information about the process and the process control system to a user, such as an operator. A screen 37 may be a touch screen allowing the user to input data and commands as well as to move a pointer or to select objects in different screens. It should be realized that the user interface 36 may also or instead comprise other means of allowing user input, such as a mouse or trackball, a keyboard or a keypad.

Fig. 3 schematically shows a first way of realizing the collaboration control device CCD 17. There is a processor 44 and a data storage 46 with computer program instructions or computer program code 48 that, when executed by the processor 44, implements a collaboration control function CCF. There is also an input/output (I/O) interface 50 for communication with the user terminals and with the process control server 16.

The collaboration control device 17 may thus be provided in the form of a processor 44 with associated program memory 46 including computer program code 48 for implementing the collaboration control function.

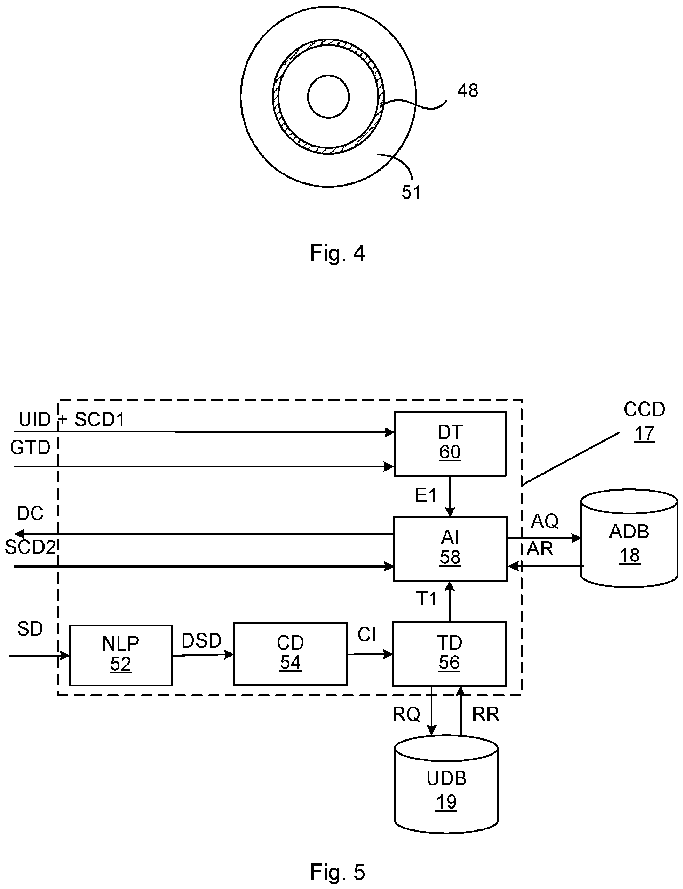

A computer program may also be provided via a computer program product, for instance in the form of a computer readable storage medium or data carrier, like a CD ROM disc or a memory stick, carrying such a computer program with the computer program code, which will implement the collaboration control function when being loaded into a processor. One such computer program product in the form of a CD ROM disc 51 with the above-mentioned computer program code 48 is schematically shown in fig. 4.

A second way of realizing the collaboration control device CCD 17 is shown in fig. 5.

The collaboration control device 17 comprises a natural language processor NLP 52, a confusion determiner CD 54, a term determiner TD 56, an asset investigator AI 58 and a display tracker DT 60, where the term determiner 56 communicates with the user database UDB 19 and the asset investigator AI 58 communicates with the asset database 18.

The natural language processor 52, confusion determiner 54, term determiner 56, asset investigator 58 and display tracker 60 together provide the collaboration control function.

The natural language processor 52 receives speech data SD, for instance in the form of VoIP data packets, and converts this data into digital speech data DSD in the form of digital words and/or sentences. The digital speech data DSD is provided to the confusion determiner 54. The confusion determiner 54 in turn provides a confusion indication CI to the term determiner 56, which term determiner 56 may send a role query RQ to the user database 19 and receive a role response RR from the user database 19. The term determiner 56 may in turn send a first term T1 to the asset investigator 58.

The display tracker 60 receives user input data UID and optionally also first screen data SCD1 from the first user terminal 14. Optionally, it also receives gaze tracking data GTD from a gaze tracking device at the first user terminal 12. The display tracker 60 determines a first display element E1 based on one or more of the user input data UID, first screen data SCD1 and gaze tracking data GTD. The first display element E1 is provided to the asset investigator 58. The asset investigator 58 optionally receives second screen data SCD2 from the second user terminal 14. The asset investigator 58 may also send an asset query AQ to the asset database 18 and receive an asset response AR therefrom.

The asset investigator 58 determines a first asset based on the first term T1 and optinally also based on the display element and an asset response AR to an asset query AQ made to the asset database 18. The asset investigator 58 the sends a display command DC to the second user terminal 14 concerning the first asset.

The user terminals are industrial Human Machine Interfaces (HMIs) and may each have one or more screens together providing a screen environment for the user of the user terminal. Each screen may be able to display several views of the automation system or of parts of the automation system.

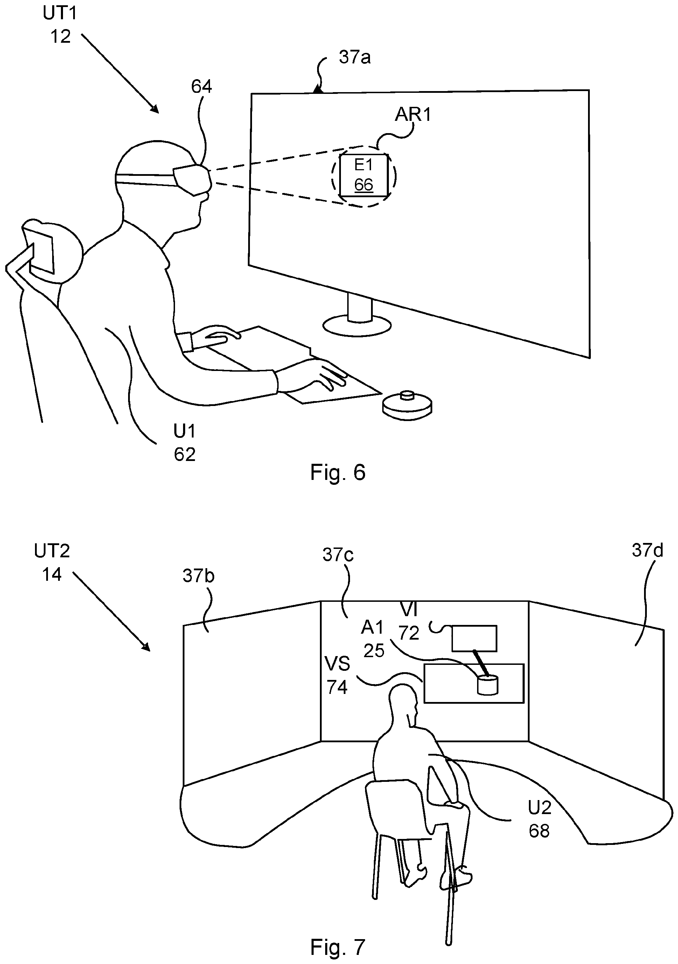

Fig. 6 schematically shows one realization of the first user terminal UT1 12 together with a first user U1 62 who is wearing a gaze tracking device 64. The gaze tracking device 64 is thus a wearable gadget, such as goggles. There is a first screen environment for the first user 62 and this first screen environment comprises at least one first screen 37a of the first user terminal 12. In this example the first screen environment comprises a single first screen 37a. There is thus only one first screen 37a and on this first screen 37a there is shown the first display element E1 66, which element may be a graphical object that corresponds to the previously mentioned first asset 25, such as an icon or a faceplate. Here also other types of elements are possible such as video streams. The gaze tracking device 64 detects an area AR1 of the first screen 37a at which the first user 62 gazes and provides this information to the collaboration control device.

It is possible that the collaboration control device has knowledge about what elements are being displayed on the first screen 37a as well as where on this screen 37a they are displayed. Alternatively, it may receive the information n via the first screen data. Based on information about the area AR1, the collaboration control device thus knows what element the first user is looking at and may also detect to what asset this element corresponds. In the present example the first user 62 gazes at the first element 66 and this element corresponds to the first asset 25.

Fig. 7 schematically shows one realization of the second user terminal UT2 14 together with a second user U2 68 of this second user terminal 14. As can be seen there is a second screen environment for the second user 68 comprising at least one second screen 37b. In the present example the second screen environment comprises three screens; the second screen 37b, a third screen 37c and a fourth screen 37d..

In the third screen 37c there is shown a video stream VS 74, which video stream comprises the first asset A1 25. There is also shown a visual illustration VI 72 of the first asset 25. In this example the visual illustration is a display element, e.g. a graphical object that corresponds to the first asset. The visual illustration 72 is also linked to the first asset 25 in the video stream 74, which may be done through displaying a line interconnecting the visual illustration 72 with the first asset 25 in the video stream 74. The visual illustration may be an image of the asset, such as a 2D or 3D image. However, it is also possible with other types of visual illustrations, such as blueprints, faceplates or icons.

Also here the collaboration control device may have knowledge about what elements are being displayed on the different screens 37b, 37c, 37d, where on these screens 37b, 37c, 37d they are displayed as well as what assets in the automation system, such as pieces of automation equipment to which they correspond. Alternatively, the information may be received via the second screen data.

It should here be realized that the first screen environment may have more than one screen and the second screen environment may have fewer screens, such as only one. Moreover, it is additionally possible that each screen in the first screen environment is provided with a gaze tracking device, which detects an area of the corresponding screen on which the user gazes. Such a gaze tracking device may with advantage be fastened onto the screen in question.

The collaboration control device with the collaboration control function is provided for improving collaboration in the automation system.

Collaboration may involve a conversation between the first and second users 62, 66 via one or more voice or video communication channels between the users, where a first communication channel may carry voice from the first user 62 to the second user 68 and a second communication channel may carry voice from the second user 68 to the first user 62.

Such a conversation may be a conversation about assets of the automation system, where an asset may be a piece of automation equipment such as a tank, a valve etc. As an example the first asset 25 is such an asset.

The first and second user 62, 68 may additionally be involved in the performing of a task in relation to the asset in the automation system 10. They may additionally have different roles in relation to the automation system. The first user 62 may have a first role and the second user 68 may have a second role. The first user 62 may for instance be an expert, while the second user 68 may be a standard or regular user. The first role may additionally or instead be linked to a first hierarchical level in an organisation linked to the automation system, such as an organization that is responsible for operating the automation system, while the second role may be linked to a second hierarchical level of the organization. Furthermore, the first role may additionally or instead be linked to a first experience level and the second role may be linked to a second experience level, which experience levels may be linked to length of time, such as years of experience in the role.

The second user may as an example be a local novice (e.g. a technician or worker) remotely communicating with the first user who may in turn be a remote expert. The remote expert can guide the local novice to troubleshoot an issue based on a display element such as a displayed video stream and verbal communication with the novice. With certain technology supports (e.g. mobile device, augmented reality), the local novice can also perceive certain guidance of the remote expert (e.g. certain drawing, verbal guidance). However, despite these technology advancements, industrial supports using existing remote collaboration technologies still often suffer communication issues caused by linguistic gaps between collaborators. For example, during the collaboration, the expert and the novice might need to communicate with each other using a language which is not the native language of either any of them. Therefore, some-times, when verbally mentioning a concept (e.g. object, artefacts, indexes, etc.), they cannot remember immediately the correct term in this language referring to the concept and struggle to express it. Another example is when the expert and the novice have different training backgrounds, where the same concept might be referred to by different terms. In such cases, the terms used by one side cannot be understood by the other. Overall, these linguistic differences can lead to confusions, even frustrations, for the collaborators and cause extra efforts for communication between them, consequently reducing the collaboration's efficiency. Such reduced collaboration efficiency can be extremely costly for companies, especially in critical situations.

In order to perform the above-mentioned task, it may be of essence that it is absolutely clear to the two users which asset they are actually talking about in order to avoid any confusions.

Aspects of the present disclosure are directed towards addressing this issue.

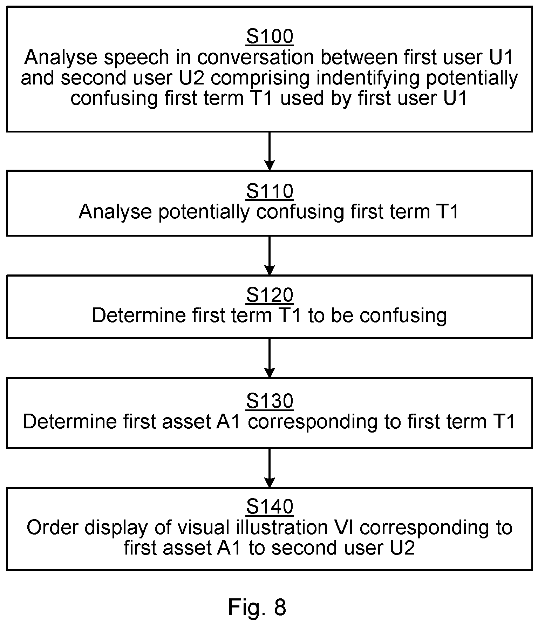

How this may be done according to a first embodiment will now be described with reference being made also to fig. 8, which shows a flow chart of a number of method steps in a method of supporting collaboration between the first user at the first user terminal and the second user at the second user terminal.

It is possible that the users have entered into a collaboration mode being operated under the control of the collaboration control function.

Furthermore, in this collaboration mode, at least one voice communication channel is being set up between the first and second users 62, 64, which communication channel may with advantage be a communication channel set up between the two user terminals. It is also possible that the communication channel passes through the collaboration control device. The communication channel may be based on Voice-over-IP (VoIP), packets sent between the first and the second user terminal 12, 14 over the first communication bus Bi, where IP is an acronym for Internet Protocol. It is possible that also the collaboration control device 17 may receive or detect these packets on the first bus B1.

The first and second users 62, 68 may thus be engaged in a conversation with each other using the at least one communication channel, where the conversation may concern an asset of the automation system, such as the first asset 25. The at least one channel may comprise a first channel with speech of the first user and a second channel with speech of the second user.

Thereby the collaboration control device 19 may be able to obtain the speech of at least the first of the first and second users 62, 68 in at least one communication channel set up between the first user terminal 12 of the first user 62 and the second user terminal 14 of the second user 62. The speech may be obtained as speech data SD, which speech data SD is provided to the natural language processor 52. In this embodiment only the speech of the first user 62 is obtained via a first VoIP channel between the first user terminal 12 and the second user terminal 14, to which first channel the collaboration control device 17 has access. The natural language processor 52 forms digital speech data DSP in the form of digital words and sentences from the speech data in the VoIP packets and forwards the digital speech data DSP to the confusion determiner 70, which continues and analyses the speech of the conversation between the first and the second user 62, 68, which analysis may comprise identifying a potentially confusing first term T1 used by the first user 62, S100.

In this case the analysis only involves analysing the speech of the first user 62. The analysis may involve analysing the words/sentences in order to determine a main language used as well as in order to determine if there are words that are potentially confusing to the second user 68. A potentially confusing first term may be a term that appears for the first time in the conversation. It may for instance be the first time that it appears in the speech of the first user 62. The analysis may involve identifying nouns spoken by the first user 62. It is also possible that one of the words is spoken in another language than the other words. The first time that a certain noun appears in the collaboration session may therefore be considered to be a potentially confusing first term T1. It may also or instead be a determining that the noun is in another language than at least a majority of other words used by the first user 62. The analysing of the potentially confusing first term may thus comprise analysing the language of the potentially confusing first term and this term may be determined to be potentially confusing if it is in another language than the speech of at least a majority of the conversation, where the majority of the conversation may comprise the majority of the speech of the first user.

If the confusion determiner 54 finds that there is a potentially confusing first term T1 in the speech of the first user 62, it then sends a confusion indication CI to the term determiner 56, which confusion identifier CI indicates that there is a potential confusion in the conversation as well as the term that is potentially confusing. The term determiner 56 then investigates the potentially confusing first term T1 in more detail. It thus analyses the potentially confusing first term T1, S110.

The term determiner 72 may have a glossary for technical terms used in the automation system. This glossary may also comprise terms in different languages. The term determiner 56 may thereby identify if the potentially confusing first term T1 is a technical term of the automation system 10 or not. In case the potentially confusing first term T1 used by the first user 62 is not present in the glossary, then it is possible that it is not considered to be confusing. However, in case the potentially confusing first term T1 is present in the glossary, it may be determined to be confusing to the second user 68, S120. The term determiner 56 may thus assume that the first term T1 is confusing to the second user 68 in case it can be found in the glossary and is a noun appearing for the first time and/or is in a different language than at least a majority of the other words in the first communication channel. If it is a noun that can be found in the technical glossary, the term may also be deemed to correspond to a type of asset in the automation system 10. The analysing of the potentially confusing first term may comprise determining that the potentially confusing first term is a term of a type of asset in the automation system. The term determiner thus determines that the first term used by the first user is confusing to the second user, which determining is based on the analysis of the speech and on the analysis of the first potentially confusing first term.

A noun corresponding to an asset and appearing for the first time in the collaboration session may thereby be considered to be a potentially confusing first term T1. The noun may also or instead be in another language than at least a majority of the other words used by the first user 62.

It is additionally possible that the terms in the glossary are linked to the different roles of the users. A term may be considered to be in the vocabulary of the first role, but not in the vocabulary of the second role. If the potentially confusing term is not in the vocabulary of the second role, then the potentially confusing first term may also be determined to be a first term T1 that is confusing to the second user 68, while if the potentially confusing term is in the vocabulary of the second role, then it is not considered confusing. The analysis of the potentially confusing first term may thus comprise an investigation of if the potentially confusing first term T1 is used in the second role. The investigation of the second role may also involve investigating if the term is used in the second role at the second hierarchical level and/or at the second experience level. The first term may then be determined to be confusing in case it is not used by the second user in the second role, which may possibly also be at the second hierarchical level and/or the second experience level. This role investigation may be done instead of or in addition to the previously mentioned investigations.

The term determiner 56 may thereby also investigate the user database 19 with a role query RQ regarding the second user 68 and will get the role of the second user as a response RR to the role query RQ.

The first term T1 that is determined to be confusing to the second user 68 is then forwarded to the asset investigator 58.

The asset investigator 58 then determines a first asset 25 in the automation system 10, to which the first term T1 corresponds, S130.

It is possible that only one display element corresponding to an asset is being displayed at the first user terminal 12. If the asset investigator 58 has knowledge of what is displayed on the first screen 37a of the first user terminal 12, then it is possible for the asset investigator 58 to determine that this display element corresponds to the first asset 25 and that the first asset 25 in turn corresponds to the first term T1. It is additionally or instead possible that the first term T1 is unique in that it is only used to categorize one asset in the whole automation system. Also in this case it is possible for the asset investigator 58 to determine that this asset for which the term is unique is the first asset 25 corresponding to the first term T1.

It is possible to determine the corresponding asset also in case the above-mentioned situations are not at hand. For instance, the first asset may be possible to determine based on inputs UID of the first user 62 at the first user terminal 12. The first user terminal 12 may send user input data UID concerning inputs made by the first user 62 in relation to areas on the first screen 37a and possibly also first screen data SCD1 to the display tracker 60, where the first screen data SCD1 comprises data about what elements are being displayed on the first screen 37a and where on the first screen 37a they are displayed. Alternatively, the display tracker 60 may already possess the first screen data SCD1. Additionally or instead to receiving user input data UID, the display tracker 60 may receive gaze information data GID indicating the area AR1 on the first screen 37a on which the first user 62 gazes.

Through the user input data UID and the first screen data SCD1 the display tracker 60 may determine inputs made by the first user 62 in relation to elements displayed on the first screen 37a. It is also or instead possible to link the gaze of the first user 62 to elements displayed on the first screen 37a. The first user 62 may for instance make inputs in relation to a displayed element, such as selecting the element using a pointer or cursor. In this case the element may be identified using such inputs. It is additionally or instead possible that the element is identified based on where the first user 62 gazes. Thereby the collaboration control device 17 may detect, based on the use of a gaze tracking device 64, the first user 62 gazing at an element displayed by the first user terminal 12

It can be seen that the display tracker 60, may in this way determine a first display element E1 on the first screen 37a that the first user operates on or is focused on. It may then send an indication of this first display element E1 to the asset identifier 58, which asset identifier 58 may then associate the first display element E1 with the first term T1.

The asset identifier 58 may then determine a first asset 25 corresponding to the first term T1, S130. As can be seen above, the determining of the first asset 25 may be based on detection of the element at which the first user gazes and/or on user inputs made in relation to an element displayed at the first user terminal 12. The determining of the first asset 25 may be performed through looking in the asset database 18 for the first display element E1 and identifying an asset that corresponds to this display element that is of interest to the first user, which identified asset then is the first asset A1 25. The determining that the first asset 25 corresponds to the first term T1 may thus be made through querying a database of assets in the automation system.

The asset corresponding to the first display element E1, which thus also corresponds to the first term T1, can thereby be identified by the asset identifier 58. The asset identifier 58 then orders the second user terminal 14 to display a visual illustration 72 corresponding to the first asset 25 to the second user 68, S140. This instruction may be sent in the display command DC and may additionally comprise an indication of where in the second screen environment the visual illustration 72 is to be displayed. It is possible that the visual illustration 72 accompanies the display command DC. In this case it may be fetched from a database of visual illustrations for the different assets. It is also possible that the second user terminal 14 is in possession of the visual illustration 72. The second user terminal 14 may additionally be instructed to display the visual illustration 72 adjacent an element in the second screen environment that depicts the first asset 25. For this reason, the asset investigator 58 may have knowledge about what elements are being displayed on the second, third and fourth screens. As an alternative, the asset investigator may have received this information as the second screen data SCD2 from the second user terminal 14.

The second user terminal 14 may thereafter display the visual indication in the second screen environment, which with advantage may be done adjacent an element in the second screen environment that depicts the first asset 25. The displaying of the visual illustration 72 is thus made using the second user terminal 14. As an example, it is displayed adjacent a video stream VS 74 where the first asset 25 is depicted. The displaying of the visual indication may thereby be a displaying of an element corresponding to the first asset at a video stream displayed by the second user terminal, where additionally the first asset may appear in the video stream.

Moreover, the ordering of the displaying as well as the displaying may be performed while the collaboration is ongoing, which may be while the at least one communication channel is being used by the first and the second users 62, 68.

It can thereby be seen that the second user gets visually assisted about the first term if this first term is deemed to be confusing. Thereby it is possible to more efficiently handle a task that needs solving. The handling of the task may also be fast. Also, the safety may be enhanced in that the likelihood of activities being performed on the wrong asset may be reduced.

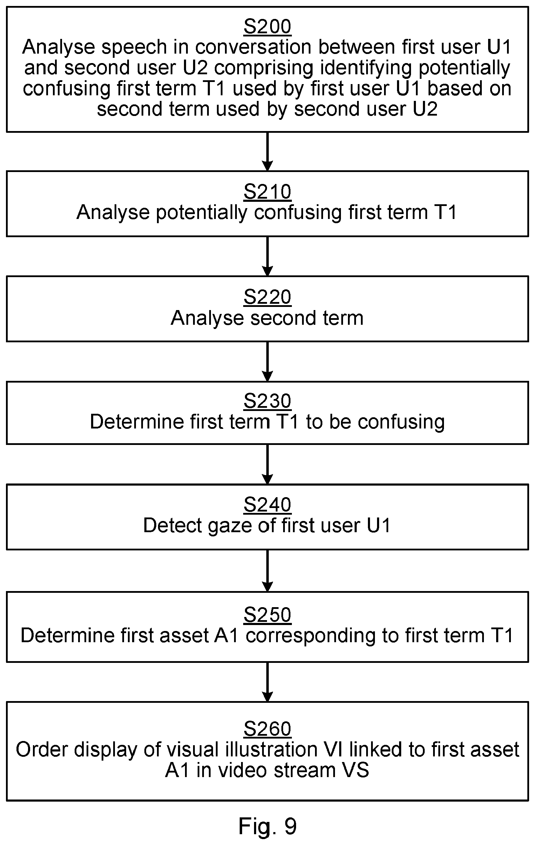

Now a second embodiment will be described with reference being made to fig. 9, which shows a flow chart of a number of method steps in the method of supporting collaboration.

In this case the speech of both the first and the second user is obtained by the natural language processor 52. The speech of both the users is thus obtained, where the speech of the first user 62 may be obtained via a first VoIP channel between the first user terminal 12 and the second user terminal 14 and the speech of the second user 68 may be obtained via a second VoIP channel between the second user terminal 14 and the first user terminal 12. The speech of the different users can for instance be discerned from each other based on the source addresses of the VoIP packets. The natural language processor 52 may have access to both the channels and may form digital speech data DSP in the form of digital words and sentences for each user and forwards the digital speech data DSP to the confusion determiner 54.

The confusion determiner 54 analyses the speech in the conversation between the first and the second user and this analysis comprises identifying a potentially confusing first term used by the first user 62 based on a corresponding second term used by the second user 68, S200.

In this case the analysis may involve analysing the words/sentences in the speech of the first user in order to determine a main language of the conversation as well as if any other language is used. The determining of a potentially confusing first term may be made for a noun spoken by the first user as well as for objects to which they correspond. A corresponding second term may be a noun that is spoken by the second user 68 close in time to when the first term is spoken. The first term T1 may be the term of an object of a type as may the second term. The first term T1 may be identified as potentially confusing if the corresponding second term is related to another type of object than the first term. The first term may also be deemed to be potentially confusing if it is in another language than the speech of the second user and/or at least a majority of the conversation. The first term T1 may in fact be considered confusing if one of the first or the second term is in another language than at least a majority of the conversation, i.e. the main language of the conversation.

The confusion determiner 54 then sends a confusion identifier CI to the term determiner 56, which confusion identifier CI may comprise the first and the second term. The term determiner 56 then analyses the first potentially confusing term, S210 as well as analyses the second term, S220. The term determiner 56 thus investigates the potentially confusing first term as well as the second term in more detail. The term determiner may identify if the first term is a technical term of the automation system or not. It may also determine a type of object to which the second term corresponds, for instance a type of asset. In case the first term used by the first user 62 is not present in the glossary, then it is possible that it is not considered confusing. However, in case the potentially confusing first term is present in the glossary, such as in the form of a term for a type of asset, it may be determined to be confusing to the second user 68, S230. The determining that the first term is confusing is thus based on the analysis of the potentially confusing first term and on the analysis of the second term. The analysis of the second term may be used as a confirmation of the correctness. If the second term is a synonym according to the glossary, then it is possible that the first term is not considered to be confusing, while if the second term is concerned with an object that is different than the type of asset to which the potentially confusing first term corresponds, such as being concerned with another type of asset, then the first term T1 may be considered to be confusing.

It is also here possible that the terms in the glossary are linked to the different roles of the users. The term determiner may thus also here investigate the user database 19 with a role query RQ regarding the second user 68 and will get the role of the second user as a response RR to the role query RQ. If the first term T1 is not in the vocabulary of the second role, then it may be determined to be confusing to the second user 68 even if the second term is a synonym or a term used for same type of asset as the first term T1. The roles may also be linked to hierarchical level and/or experience level in the same way as in the first embodiment.

The first term T1 that is determined to be confusing to the second user 68 is then forwarded to the asset investigator 58.

In this embodiment the gaze detecting device 64 is used to detect at which area AR1 the first user 62 gazes and this is used by the display tracker 60 to detect at which display element the first user gazes, S240.

The display tracker 60 may also use the user input data UID to determine the display element. Thereby, the display tracker 60 determines the first display element E1 on the first screen 37a that the first user is focused on. It then sends an indication of this first display element E1 to the asset identifier 58, which asset identifier 58 then associates the first display element E1 with the first term T1.

The asset investigator 74 then determines a first asset A1 in the automation system, to which the first term T1 corresponds, S250, which may be made in the same way as in the first embodiment.

In this second embodiment the second user terminal 14 displays a video stream 74 of the first asset 25. It is possible that also the first user terminal displays this video stream. In fact, it is possible that the first display element 66 is the video stream.

The asset identifier then orders the second user terminal 14 to display a visual illustration 72 linked to the first asset 25 in the video stream 74, S260.

The collaboration control device and/or the first and second user terminals, may be equipped with an object recognition module, which can detect certain objects in the shared content (for example, detecting the image of a tank in the share video feed). Then, the visualization of the term "tank" can be linked to the detection of the tank in the video stream, offering the user better awareness on where the asset of interest is

As can be seen above, in order to mitigate the linguistic gaps between the first and the second user in computer-based industrial remote support collaboration, aspects of the present disclosure proposes a solution that complements collaborators' verbal communication by providing visual illustrations of the concepts that the collaborators are mentioning to their counterparts. In this way, a collaborator can comfortably verbally mention a concept using the corresponding terms in his/her own language, the collaboration control device will recognize the terms in his/her own speech, retrieve visual illustrations of that concept (e.g. images, videos or 3D models) from a certain database (e.g. from internet or a specialized database) and display them to his/her remote collaborator(s). Using this approach, although collaborators might refer to the same concept using different terms due to the difference in their languages, the visual illustrations should allow them to intuitively and quickly understand what their counterparts are mentioning. This approach can be applied either for the cases where one or either of the collaborators need to speak a non-native language to communicate with their counterparts; or for the cases where the collaborators might speak the same mother tongue but have different training backgrounds, thus having different technical vocabularies for the same concepts.

It is assumed that in the collaboration each side can not only hear the verbal communication but also see visual media (e.g. images, videos or even 3D models) from their remote counterpart using certain devices (e.g. laptop, smartphones/tablets or AR headset).

Speech recognition algorithms can be applied to extract potentially confusing terms in a collaborator's verbal communication. There can be several ways to determine if a term is potentially confusing. For example, if the term appears for the first time in the conversation between collaborators, it can be new and confusing to the counterpart of the speaking person. Another example of a potentially confusing term is if it belongs to a language different from the language that has been mainly used in the collaboration session (e.g. A Swedish expert remote supporting an English novice suddenly for-gets the English word of a concept, thus uses a Swedish term to refer to it). The collaboration control device 17 can also base on the profiles of the collaborators to identify if a spoken term can potentially cause confusions between them. For example, if an engineer supports an operator, the common technical terms often used by each person can be extracted from their training/education programs or relevant databases to train the speech recognition component. The speech recognition component will then detect the appearances of those terms in the conversation between the engineer and the operator and check if a term used by an engineer is also commonly used by an operator by referring to the database. If not, the term can be considered as potentially confusing because one of the collaboration sides might not understand it.

Once a potentially confusing term is detected from the collaborators' speech, its corresponding visual illustrations can be retrieved from certain data storages. The visual illustrations can be in different formats: images, videos or even 3D models. Depending on the display capability of the remote collaborator's device, suitable visual illustrations will be shown in the appropriate manner. For example, if two remote collaborators are video-calling each other, where each side can view the video stream from the other on his/her laptop/smartphone/tablet screen, the visual illustrations coupled with the corresponding text of the term can pop up at a corner of the screen to avoid invasively obscuring the video feed. In case the remote collaboration session is using augmented-reality technology, if the term refers to an object in the environment of a local collaborator and assuming that the system has an object recognition module that can detect the presence of the referred object in the captured video feed, the visual illustration and corresponding text can be placed at the position of the object in the captured video feed. This can even help the local collaborator identify the location of the mentioned object more quickly.

There are a number of variations that are possible apart from those already described. The collaboration control device need not be provided centrally. It may just as well be provided as a part of the first user terminal or the second user terminal. The first or the second user terminal may additionally be a mobile device such as laptop, pad or smart phone..

It should also be realized that it is possible to omit the use of gaze tracking from the second embodiment. Moreover, in the examples above the first term of the first user was considered confusing for the second user. It should be realized that the second term of the second user may be determined confusing to the first user and handled in the same way as described above in relation to the first term.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

## Claims

1. A method of supporting collaboration between a first user (62) at a first user terminal (12) and a second user (68) at a second user terminal (14), the method being performed by a collaboration control device (17) of an automation system (10) and comprising:
analysing (S100, S200) speech of a conversation between the first and the second user (62, 68),
determining (S120; S230) a first term (T1) used by the first user (62) to be confusing to the second user (68), which determining is based on the analysis of the speech,
determining (S130; S230) a first asset (25) in the automation system (10) corresponding to the first term (T1), and
ordering a displaying (S140; S260) of a visual illustration (72) corresponding to the first asset (25) to the second user (68).

2. The method as claimed in claim 1, further comprising detecting (S240), based on the use of a gaze tracking device (64), the first user (62) gazing at an element (66) displayed by the first user terminal (12), wherein the determining of the first asset (25) is based on detection of the element (66) at which the first user (62) gazes.

3. The method according to claim 1 or 2, wherein the displaying of the visual indication (72) corresponding to the asset (25) comprises displaying an element corresponding to the first asset (25) at a video stream (74) displayed by the second user terminal (14).

4. The method as claimed in claim 3, wherein the first asset (25) appears in the video stream (74) and the displayed element is linked to the first asset (25) in the video stream (74).

5. The method as claimed in any previous claim, wherein the analysis of the speech (S100, S200) comprises identifying a potentially confusing first term (Ti) used by the first user (62) and analysing (S110; S220) the potentially confusing first term (T1) and where the determining that the first term is confusing (S120; S220) is based on the analysis of the potentially confusing first term.

6. The method according to claim 5, wherein the potentially confusing first term (Ti) is a term that appears for the first time in the conversation.

7. The method as claimed in claim 5 or 6, wherein the first user (62) has a first role in the automation system (10), the second user (68) has a second role in the automation system (10) and the analysis of the potentially confusing first term (Ti) comprises an investigation of if the potentially confusing first term (Ti) is used in the second role.

8. The method as claimed in any of claims 5 - 7, wherein the analysing of the potentially confusing first term (Ti) comprises analysing the language of the potentially confusing first term (Ti) and the determining that it is confusing is made if the potentially confusing first term (T1) is in another language than the speech of the second user (68) and/or at least a majority of the conversation.

9. The method as claimed in any of claims 5 - 8, wherein the analysing of the potentially confusing first term comprises determining that the potentially confusing first term (Ti) is a term of a type of asset in the automation system.

10. The method as claimed in any claims 5 - 9, wherein the analysis of the speech (S200) comprises identifying a second term used by the second user (68) and analysing (S220) the second term, where the determining that the first term (Ti) is confusing to the second user is also based on the analysis of the second term.

11. The method according to claim 10 when depending on claim 9, wherein the analysis of the second term comprises determining a type of object to which the second term corresponds and the determining of the first term as being confusing is made if the type of object is different than the type of asset to which the potentially confusing first term corresponds.

12. A collaboration control device (17) for supporting collaboration between a first user (62) at a first user terminal (12) and a second user (68) at a second user terminal (14), the collaboration control device (17) being provided for an automation system (10) and comprising a processor (44) configured to :
analyse speech of a conversation between the first and the second user (62, 68),
determine a first term (T1) used by the first user (62) to be confusing to the second user (68), which determining is based on the analysis of the speech,
determine a first asset (25) in the automation system (10) corresponding to the first term (T1), and
order a displaying (S140; S260) of a visual illustration (72) corresponding to the first asset (25) to the second user (68).

13. A computer program for supporting collaboration between a first user (62) at a first user terminal (12) and a second user (68) at a second user terminal (14), said computer program comprising computer program code (48) which when executed by a processor (44) of a collaboration control device (17) according to claim 12 causes the collaboration control device (17) to perform the steps of the method as claimed in any of claims 1-11.

14. A computer program product for supporting collaboration between a a first user (62) at a first user terminal (12) and a second user (68) at a second user terminal (14), the computer program product comprising a data carrier (51) with the computer program with computer program code (48) according to claim 13.

15. An automation system comprising:
a first user terminal (12) for a first user (62),
a second user terminal (14) for a second user (14), and
a collaboration control device (17) comprising a processor (44) configured to:
analyse speech of a conversation between the first and the second user (62, 68),
determine a first term (T1) used by the first user (62) to be confusing to the second user (68), which determining is based on the analysis of the speech,
determine a first asset (25) in the automation system (10) corresponding to the first term (T1), and
order a displaying (S140; S260) of a visual illustration (72) corresponding to the first asset (25) to the second user (68).
